# EUROPEAN PATENT SPECIFICATION

(11) **EP 1 791 726 B1**
(45) Date of publication and mention of the grant of the patent: **17.02.2010**
(21) Application number: 05778619.6
(22) Date of filing: 02.09.2005
(51) Int. Cl.: B60R 16/02, B60R 11/02, B60R 1/12

(54) **PERIPHERAL UNIT CONTROL SYSTEM FOR A MOTOR VEHICLE**
PERIPHERIEEINHEITSSTEUERSYSTEM FÜR EIN KRAFTFAHRZEUG
SYSTEME DE COMMANDE D'UNITE PERIPHERIQUE, DESTINE A ETRE EMPLOYE EN PARTICULIER DANS UN VEHICULE A MOTEUR

(30) Priority: 24.09.2004 IT RM20040453
(43) Date of publication of application: 06.06.2007
(73) Proprietor: Sintel Italia S.p.A., 00040 Ardea RM (IT)
(72) Inventor: POLIZZI, Gianfranco, Sintel Italia S.p.A., I-00040 Loc. Caronti (ARDEA) RM (IT)
(74) Representative: Iannone, Carlo Luigi
(86) International application number: PCT/IT2005/000507
(87) International publication number: WO 2006/033128

(56) References cited:
- US-A- 4 818 010
- US-A- 5 339 362
- US-A1- 2003 163 230
- US-A1- 2004 145 457
- US-B1- 6 282 464
- US-B1- 6 703 944

## Description

The present invention relates to a peripheral unit control system, particularly to be employed in a motor vehicle.

More specifically, the invention concerns to a system allowing managing a plurality of devices and sensors by a user, such as the driver or the passengers of a car, said system being particularly studied and realised for transportation means of police force and/or vehicles for special operative units (Firemen, Civil Protection, Road Managing Units, Ambulances, Breakdown Lorries, Harbour and Airport Vehicles, Earth Handling Means), but that can be used for each kind of use requiring managing a plurality of electronic devices.

A similar unit control system has been disclosed according to the preamble of claim 1 in US 2004/0145457.

In the following the specification will be addressed to the order police vehicles use, but it is well evident that the same must: not be considered limited to this specific use.

As it is well known, motor vehicles are now equipped with a plurality of electronic or mechanic accessories, in order to accomplish different functions and services, such as warning sirens, winking lights, lights, satellitar navigator, display, cameras, proximity sensors, variable message display, badge readers for enabling the on-board services, microphones, etc.

At present, different kinds of controls and remote controls are used in order to control said devices.

For example, said controls can be levers, buttons, video devices and like, often installed on the dashboard of the motor vehicle. This implies the needing of making holes for their fixing. Remote controls are instead very convenient, but they have the problem that are usually lot within the motor vehicle cabin, and in case it is necessary realising a large number of devices, their number growths, thus creating confusion for using the different services.

In order to solve the above technical problems, many controls for the devices implemented in the motor vehicles have been placed on the steering wheel, mainly to avoid the need of moving the hands from the steering wheel when driving. Among the most known devices usually controlled from the steering wheel, it can be mentioned the car radio, the satellitar navigator and like.

Problem of this kind of solution is connected to the limited number of controls that it is possible placing on the steering wheel, limiting the maximum number of device that can be controlled. Furthermore, passengers cannot reach the controls.

In view of the above, it is object of the present invention that of suggesting a single unit wherein all the controls are included and that can be interfaced with electronic of all devices, piloting them exactly with the same operation mode of the original operation. Said solution allows obtaining the double advantage of providing to the operator (driver or passenger) a single control device by which he can operate all the on-board devices and eliminate the huge amount of single controls, remote controls, buttons and like, provided within the cabin without any functional and ergonomic criteria.

Another object of the invention is that of positioning the control of the two devices within a housing that is very convenient to by used by a user within the motor vehicle cabin.

It is therefore specific object of the present invention a peripheral unit control system, particularly to be employed in a motor vehicle, **characterised in that** it comprises a control unit, an activation unit and supply means for said control unit and said activation unit, said control unit being connected with peripheral units and with said activation unit, and comprising actuation means selecting said peripheral units, said activation unit comprising interaction and/or visualization means for interacting with said selective actuation means by signals to activate and/or deactivate at one of said peripheral units.

Always according to the invention, at least some of said peripheral units can be housed inside or outside said control unit.

Still according to the invention, a cable, e.g. a multi-wire cable, can connect said control unit and said activation unit.

Furthermore, according to the invention, said control unit and said activation unit can be connected by infrared and/or radio frequency devices or by different wireless systems (blue-tooth, WiFi, etc.).

Always according to the invention, cables can connect said control unit and said peripheral units.

Still according to the invention, said peripheral units can be alarm sirens and/or telemetry sensors, and/or a video-recorder, and/or emergency signaller, and/or winking lights, and/or lights, and/or transmitting device, and/or navigator, and/or camera and/or GPS device, and/or microphone, and/or variable message display.

Preferably according to the invention, said selective actuation means can be comprised of at least a relays and/or a solid-state device, such as SCR and/or TRIAC.

Furthermore, according to the invention, said selective actuation means can comprise a control logic unit.

Always according to the invention, said activation unit can comprise a programmable microprocessor for piloting said interaction and/or visualization means and for interfacing with said control unit.

Preferably, according to the invention, said interaction and/or visualization means can comprise at least a camera addressed toward the windscreen, to take outside scenes.

Still according to, the invention, said interaction and/or visualization means can comprise a liquid crystal display, preferably active matrix liquid crystal display, a microphone and/or a push-button panel.

Furthermore, according to the invention, said activation unit can be comprised within a housing placed in lieu of the inner rear-vision mirror, housing the activation and visualization unit, with keyboard and monitor. Furthermore, said housing has on its back one or more micro-cameras, the shooting range being directed toward the windscreen, thus outward.

Still according to the invention, said activation and visualization unit projects downward from the housing wherein it is contained through a vertical sliding system, making all the controls present on its panel visible and usable and the images visible on the small liquid crystal display. When the unit is not used, it is retracted, sliding upward, within the housing containing the same.

Advantageously, according to the invention, said activation unit can rotate with respect to its vertical axis, in order to permit its best use and view both by the driver and the passenger.

Preferably, according to the invention, said activation unit can provide a release pawl, in order to slide on said pin, that can be a rectilinear pin or a pantograph.

Furthermore, according another embodiment of the invention, the activation unit can have a case shape comprised of two elements hinged each other along the long side. When the case is closed, it has a surface faced toward the driver having a rear-view mirror, that once rotated downward has inside the, activation and visualization unit and on the fix element, which is uncovered when the case is open, another mirror surface, acting as rear view mirror. Also in this embodiment the element of the case open can rotate toward the driver or toward the passenger.

Still according to the invention, said supply means can comprise reserve batteries provided inside said control and/or activation unit.

Always according the invention, said system can provide a consent device for ignition, connected with the ignition lock key.

The present invention will be now described, for illustrative but not limitative purposes, according to its preferred embodiments, with particular reference to the figures of the enclosed drawings, wherein:
figure 1 shows a block diagram of the peripheral unit control system according to the present invention;
figure 2 shows a block diagram of the possible peripheral units that can be provided inside the control unit;
figure 3 is a schematic view of the possible peripheral units that can be connected with the control unit;
figure 4 shows an activation unit of said peripheral unit control system;
figure 5 shows a cabin of a car wherein the activation unit of said peripheral unit control system is provided; and
figure 6 shows a cabin of a car wherein the activation unit of said peripheral unit control system according to figure 5 are installed, in a use configuration.

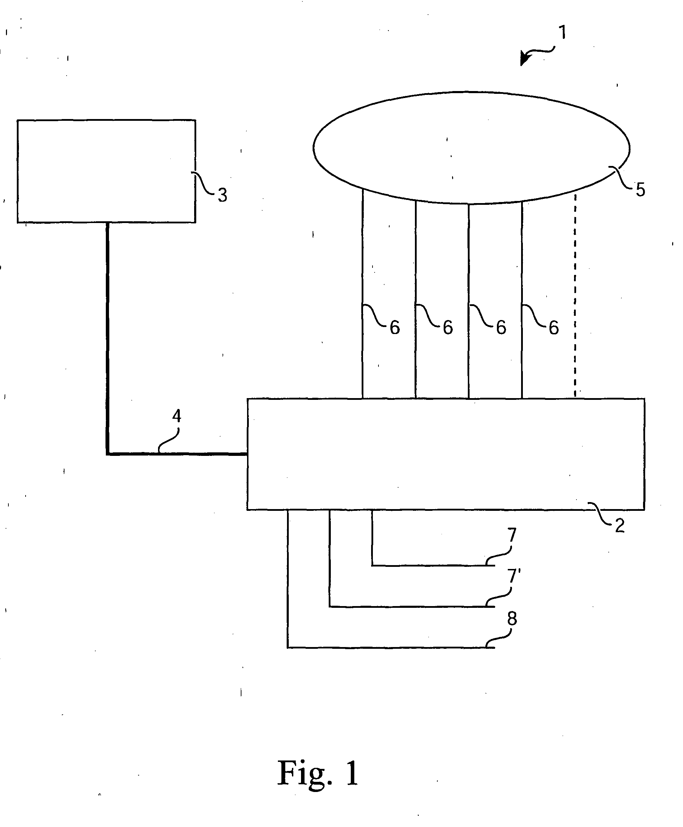

Making reference to figure 1, it is possible noting a block diagram, showing the realisation of the system according to the present invention. Particularly, it is possible noting a control unit 2 connected with an activation unit 3, by the connection 4. connections 6 connect peripheral units 5 with the activation unit 3. It is possible, by the activation unit 3, that can be used by the user, e.g. the motor vehicle driver, actuating, deactivating, piloting, or monitoring the operation of the peripheral units 5.

Control unit 2 is placed far from the actuation unit 3; particularly, it can positioned within a housing inside the vehicle, allowing housing a prism with a side of about 30 cm.

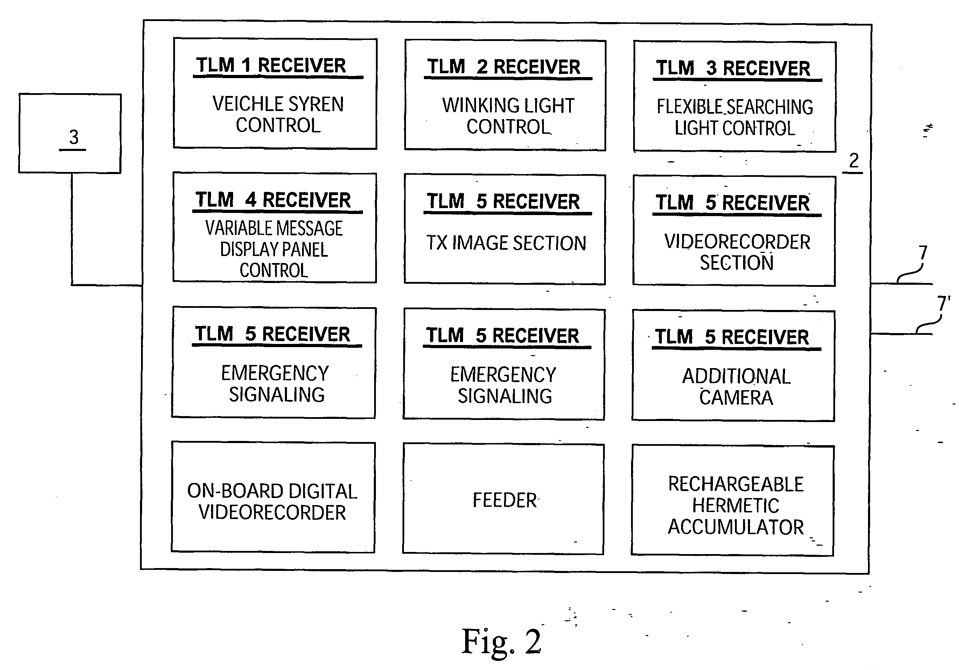

Peripheral units 5 can be provided inside the control unit 2, or outside the same, as it can be noted from the block diagram of figure 2. In the present embodiment, five telemetric sensors (not shown in the figures) are provided among the peripheral units 5, used to manage the following functions:
- activation/deactivation of the motor vehicle siren alarm;
- partial or total switching on/off of the motor vehicle winking lights;
- activation/training/training of the searching light;
- activation/deactivation of a panel for displaying of variable messages.

Coupling of a specific telemetric sensor for the above-mentioned functions is useful for ensuring the continuity of services in case one of them fails. If, for example, section dedicated to control of the searching light would fail, it is possible activating the siren alarm, the winking lights and the panel for displaying of variable messages.

Further peripheral units can be housed within the control unit 2, e.g.:
- activation/deactivation of a device dedicated to the transmission of images shot by possible on-board cameras;
- activation/deactivation of an analogical video-recorder;
- activation of an emergency signal;
- image and/or audio signal transceiving devices;
- on-board digital video recorder;
- emergency rechargeable accumulator.

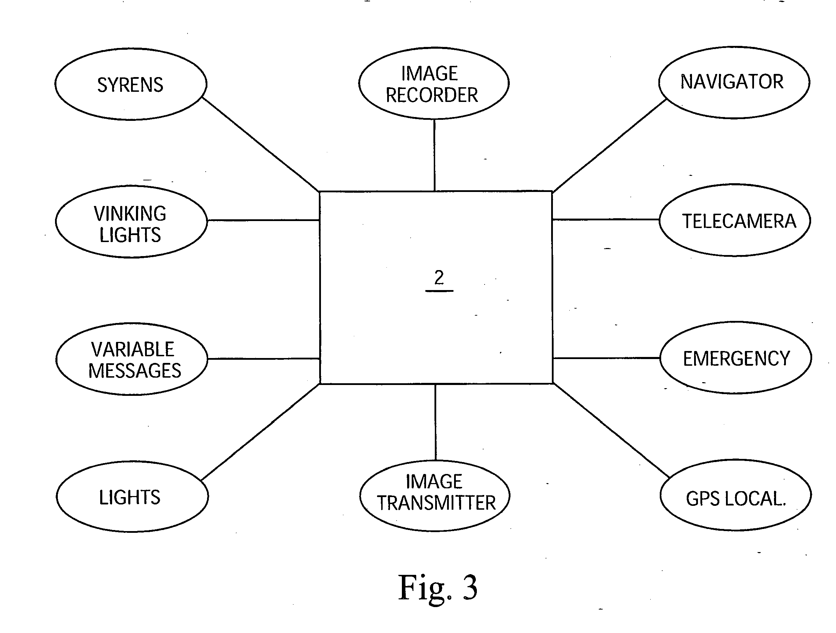

Peripheral units that can in case be connected to the control unit, can be of different kind. From figure 3 it is possible noting the presence of:
- siren alarms;
- winking lights;
- lights;
- emergency and standard message control system;
- image recorder;
- transmitter;
- navigator;
- Telecamera;
- GPS device.

Activation and deactivation of devices mentioned in the above occurs by suitable switches. In the present embodiment, said switches are relays (not shown in the figures)., It is possible observing also solid-state power devices, such as SCR or TRIAC.

Control unit 2 shall interface with an assisted navigation systems (not shown in the figures). To this end, it is provided a suitable interface circuit able allowing replacement of remote control device of said navigation system with the actuation unit 3.

Supply of the control unit 2 occurs by a single feeder stabilised by battery of the motor vehicle on cables 7 and 7'. Furthermore, a circuit for permitting the ignition is provided, applied to the connection 8. more specifically, it is possible permitting the operation of the control unit 2 by a commutator connected with the ignition key on the dashboard (not shown)of the motor vehicle on which the system is installed.

Cable 4 used for connection of actuation unit with the control unit is of the "twisted pair" kind. It is a multi-wire cable for transmitting serial data.

Said connection 4 between the control 2 unit and the actuation unit 3 can be of the infrared or radio frequency kind, providing suitable transceiving devices (not shown).

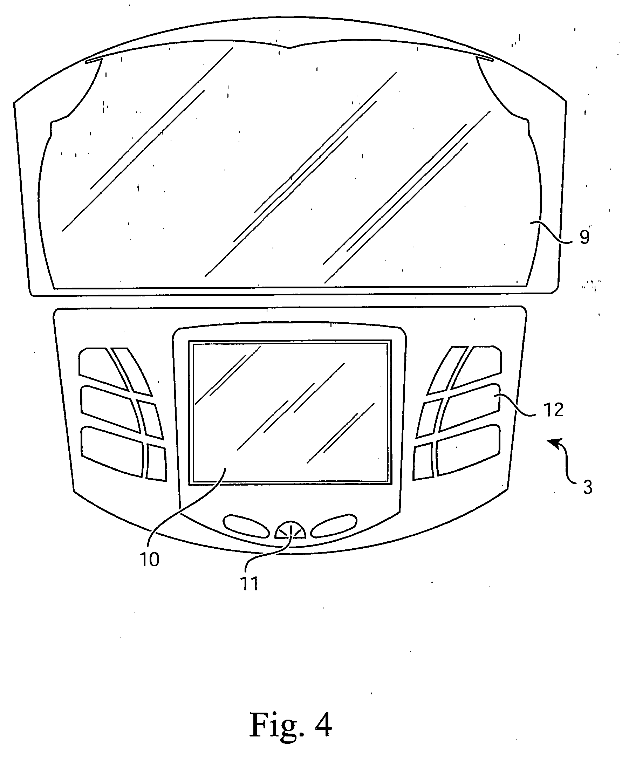

Figure 4 shows the actuation unit 3 that, in the present embodiment, is positioned under the rear vision mirror 9. Said solution is particularly convenient, even not compulsory, since it allows being within reach of all the persons within the motor vehicle cabin.

Actuation unit 3 provides a liquid crystal display 10, a microphone 11 and a button panel 12, for managing all the system control functions. Preferably, display is of the active matrix TFT kind, in order to allow a clear vision also from different angles. Scanning system is of the PAL type, with a 4: 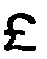 aspect ratio. Signal entrance is realised with an unbalanced line.

Two colour cameras are provided on said actuation unit, having a CCD sensor (Charge Couple Device). Each one of the cameras has a fixed lens, a zoom lens and a lens with a wider range.

Within the actuation unit 3 a microprocessor device is placed. In the present embodiment an 80386 microprocessor has been employed, but it also possible using programmable microprocessors.

They are further provided other devices for piloting a loud speaker, for keyboard interface, for adjustment of monitor parameters and for commutation of video supply.

Microphone 11 is of the *electret* kind and provides a pre-amplification circuit.

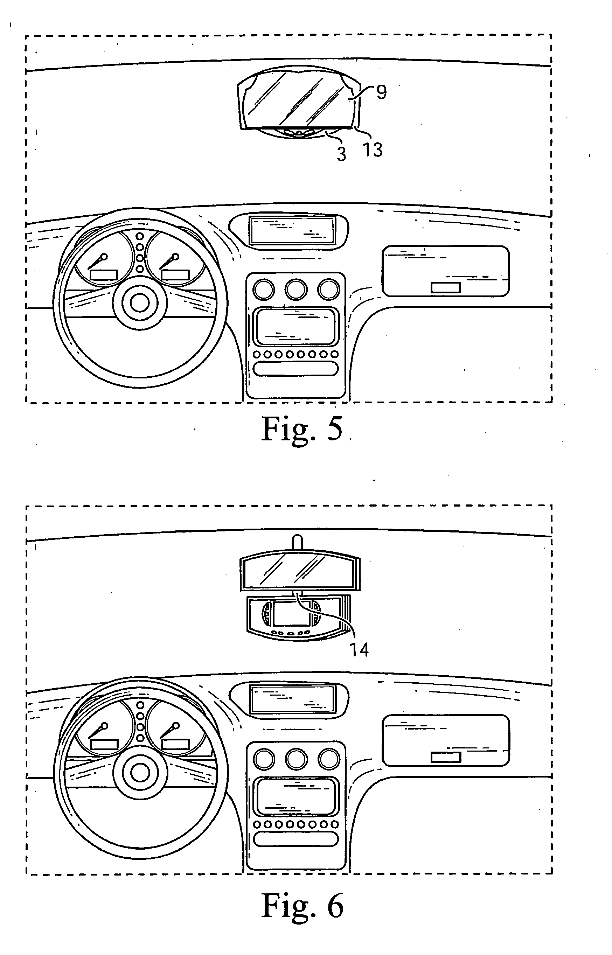

Actuation unit 3, when not operative, can be placed within a suitable housing 13, behind said rear vision mirror 9. Control unit 3 is shown at rest in figure 5. In order to make said unit coming down, a pawl (not shown) is provided, allowing to the unit of sliding along a rectilinear or pantograph-shaped vertical pin 14. Another feature of the invention is that said actuation unit 3 slides downward and can rotate toward the driver or toward the passenger. Furthermore, said actuation unit 3 can rotate with respect to said pin 14, thus allowing a convenient use of the actuation unit both by the driver and the passenger.

On the basis of the previous specification, it can be noted that the basic feature of the present invention is that having realised an on-board centralised control and display unit, comprised of an assembly of display, control, actuation and video shot instruments contained within an element such as a rear view mirror, bigger than the standard one, housing inside the control and display unit. Said element has on its inner side faced toward the driver has the real rear view mirror and at the rear can house one or more miniature cameras for shooting the scene in front of the motor vehicle. Said actuation unit permits controlling a plurality of devices.

An advantage of the present invention is that said system can be installed on motor vehicles having each shape and features of the dashboard, both at the beginning and as retrofitting.

A further advantage is that said device allows abolishing a plurality of control devices, which are usually associated to an own device, and integrating with each kind of motor vehicle.

A further advantage of the present invention is that the device can be easily controlled both by the driver and by the passengers.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Peripheral unit control system to be employed in a motor vehicle, comprising a control unit (2), an actuation unit (3) and supply means for said control unit and said actuation unit; said control unit being connected with peripheral units and with said actuation unit; and actuation means selecting said peripheral units, said actuation unit comprising interaction and/or visualization means for interacting with said selective actuation means by signals to activate and/or deactivate at one of said peripheral units; **characterised in that** said actuation unit is contained within a housing (13), which provides with a mirror (9) on the surface faced inside the cabin of the car so as to be used as rear-vision mirror, and said housing containing said actuation unit in a rest position; and said actuation unit providing vertical pin (14), along which can slide said actuation unit, in such a way that, when in a rest position, said actuation unit can positionate inside said rear-vision mirror.

2. System according to claim 1, **characterised in that** at least some of said peripheral units are housed inside said control unit.

3. System according to one of the preceding claims, **characterised in that** said at least some of said peripheral units are housed outside said control unit.

4. System according to one of the preceding claims, **characterised in that** control unit and said actuation unit are connected by a cable.

5. System according to claim 4, **characterised in that** said cable is a multi-wire cable.

6. System according to one of the preceding claims 1-3, **characterised in that** said control unit and said actuation unit are connected by infrared and/or radio frequency devices or by different wireless systems (blue-tooth, WiFi, etc.).

7. System according to one of the preceding claims, **characterised in that** said control unit and said peripheral units are connected by cables.

8. System according to one of the preceding claims, **characterised in that** said peripheral units are alarm sirens and/or telemetry sensors, and/or a video-recorder, and/or emergency signaller, and/or winking lights, and/or lights, and/or transmitting device, and/or navigator, and/or camera and/or GPS device, and/or, microphone, and/or variable message display.

9. System according to one of the preceding claims, **characterised in that** said selective actuation means are comprised of at least a relays.

10. System according to one of the preceding claims, **characterised in that** said selective actuation means are comprised of a solid-state device.

11. System according to claim 10. **characterised in that** said solid-state device is a SCR and/or TRIAC.

12. System according to one of the preceding claims, **characterised in that** said selective actuation means comprise a control logic unit.

13. System according to one of the preceding claims, **characterised in that** said actuation unit comprise a programmable microprocessor for piloting said interaction and/or visualization means and for interfacing with said control unit.

14. System according to one of the preceding claims, **characterised in that** said interaction and/or visualization means at least a camera addressed toward the windscreen, to take outside scenes.

15. System according to one of the preceding claims, **characterised in that** said interaction and/or visualization means comprise a liquid crystal display, preferably active matrix liquid crystal display.

16. System according to one of the preceding claims, **characterised in that** said interaction and/or visualization means comprise a microphone.

17. System according to one of the preceding claims, **characterised in that** said interaction and/or visualization means comprise a push-button panel.

18. System according to one of the preceding claims, **characterised in that** said actuation unit comprises at least a camera in the surface faced toward the windscreen, said camera being connected with said actuation unit.

19. System according to one of the preceding claims, **characterised in that** said pin is a rectilinear pin or a pantograph.

20. System according to one of the preceding claims, **characterised in that** said actuation unit can rotate with respect to said vertical pin.

21. System according to one of the preceding claims, **characterised in that** said actuation unit comprises a release pawl in order to slide on said pin.

22. System according to one of the preceding claims, **characterised in that** said supply means comprise reserve batteries provided inside said control and/or actuation unit.

23. System according to one of the preceding claims, **characterised in that** said system provides a consent device for ignition, connected with the ignition lock key.

## Patentansprüche

1. Peripherieeinheits-Steuersystem zur Nutzung in einem Kraftfahrzeug, umfassend eine Steuereinheit (2), eine Betätigungseinheit (3) und Versorgungsmittel für die Steuereinheit und für die Betätigungseinheit; wobei die Steuereinheit mit Peripherieeinheiten und mit der Betätigungseinheit verbunden ist; und wobei die Betätigungsmittel die Peripherieeinheiten auswählen, wobei die Betätigungseinheit Interaktions- und/oder Visualisierungsmittel für die Interaktion mit den selektiven Betätigungsmitteln durch Signale zum Aktivieren und/oder Deaktivieren bei einer der Peripherieeinheiten umfasst; **dadurch gekennzeichnet, dass** die Betätigungseinheit in einem Gehäuse (13) enthalten ist, das an der Oberfläche mit einem Spiegel (9) versehen ist, der ins Innere des Fahrgastraums des Fahrzeugs weist, um als Rückspiegel verwendet zu werden, und wobei das Gehäuse die Betätigungseinheit in einer Ruhelage enthält; und wobei die Betätigungseinheit einen vertikalen Stift (14) bereitstellt, entlang dessen die Betätigungseinheit in der Weise gleiten kann, dass die Betätigungseinheit in einer Ruhelage in dem Rückspiegel positioniert sein kann.

2. System nach Anspruch 1, **dadurch gekennzeichnet, dass** wenigstens einige der Peripherieeinheiten innerhalb der Steuereinheit unterbracht sind.

3. System nach einem der vorstehenden Ansprüche, **dadurch gekennzeichnet, dass** die wenigstens einigen der Peripherieeinheiten außerhalb der Steuereinheit unterbracht sind.

4. System nach einem der vorstehenden Ansprüche, **dadurch gekennzeichnet, dass** die Steuereinheit und die Betätigungseinheit durch ein Kabel verbunden sind.

5. System nach Anspruch 4, **dadurch gekennzeichnet, dass** das Kabel ein mehradriges Kabel ist.

6. System nach einem der vorstehenden Ansprüche 1-3, **dadurch gekennzeichnet, dass** die Steuereinheit und die Betätigungseinheit durch Infrarot- und/oder Radiofrequenzvorrichtungen oder durch andere drahtlose Systeme (Bluetooth, WiFi, usw.) verbunden sind.

7. System nach einem der vorstehenden Ansprüche, **dadurch gekennzeichnet, dass** die Steuereinheit und die Peripherieeinheiten durch Kabel verbunden sind.

8. System nach einem der vorstehenden Ansprüche, **dadurch gekennzeichnet, dass** die Peripherieeinheiten Alarmsirenen und/oder Telemetriesensoren und/oder ein Videorecorder und/oder ein Notsignalgeber und/oder Blinklichter und/oder Leuchten und/oder eine Sendevorrichtung und/oder ein Navigationsgerät und/oder eine Kamera und/oder eine GPS-Vorrichtung und/oder ein Mikrophon und/oder eine variable Nachrichtenanzeige sind.

9. System nach einem der vorstehenden Ansprüche, **dadurch gekennzeichnet, dass** die selektiven Betätigungsmittel wenigstens ein Relais umfassen.

10. System nach einem der vorstehenden Ansprüche, **dadurch gekennzeichnet, dass** die selektiven Betätigungsmittel eine Festkörpervorrichtung umfassen.

11. System nach Anspruch 10, **dadurch gekennzeichnet, dass** die Festkörpervorrichtung ein SCR und/oder ein TRIAC ist.

12. System nach einem der vorstehenden Ansprüche, **dadurch gekennzeichnet, dass** die selektiven Betätigungsmittel eine Steuerlogikeinheit umfassen.

13. System nach einem der vorstehenden Ansprüche, **dadurch gekennzeichnet, dass** die Betätigungseinheit einen programmierbaren Mikroprozessor zum Leiten der Interaktions- und/oder Visualisierungsmittel und als Schnittstelle mit der Steuereinheit umfasst.

14. System nach einem der vorstehenden Ansprüche, **dadurch gekennzeichnet, dass** die Interaktions- und/oder Visualisierungsmittel wenigstens eine Kamera umfassen, die in Richtung der Windschutzscheibe gerichtet ist, um Außenszenen aufzunehmen.

15. System nach einem der vorstehenden Ansprüche, **dadurch gekennzeichnet, dass** die Interaktions- und/oder Visualisierungsmittel eine Flüssigkristallanzeige, vorzugsweise eine aktive Matrixflüssigkristallanzeige, umfassen.

16. System nach einem der vorstehenden Ansprüche, **dadurch gekennzeichnet, dass** die Interaktions- und/oder Visualisierungsmittel ein Mikrophon umfassen.

17. System nach einem der vorstehenden Ansprüche, **dadurch gekennzeichnet, dass** die Interaktions- und/oder Visualisierungsmittel eine Bedienschalttafel umfassen.

18. System nach einem der vorstehenden Ansprüche, **dadurch gekennzeichnet, dass** die Betätigungseinheit in der Oberfläche wenigstens eine Kamera umfasst, die in Richtung der Windschutzscheibe gerichtet ist, wobei die Kamera mit der Betätigungseinheit verbunden ist.

19. System nach einem der vorstehenden Ansprüche, **dadurch gekennzeichnet, dass** der Stift ein gerader Stift oder Pantograph ist.

20. System nach einem der vorstehenden Ansprüche, **dadurch gekennzeichnet, dass** sich die Betätigungseinheit in Bezug auf den vertikalen Stift drehen kann.

21. System nach einem der vorstehenden Ansprüche, **dadurch gekennzeichnet, dass** die Betätigungseinheit eine Auslöseklinke umfasst, um an dem Stift zu gleiten.

22. System nach einem der vorstehenden Ansprüche, **dadurch gekennzeichnet, dass** die Versorgungsmittel Reservebatterien umfassen, die innerhalb der Steuer- und/oder der Betätigungseinheit bereitgestellt sind.

23. System nach einem der vorstehenden Ansprüche, **dadurch gekennzeichnet, dass** das System eine Einwilligungsvorrichtung für die Zündung bereitstellt, die mit dem Zündschlüssel verbunden ist

## Revendications

1. Système de commande d'unité périphérique utilisé dans un véhicule à moteur, comprenant une unité (2) de commande, une unité (3) d'actionnement et des moyens d'alimentation destinés à ladite unité de commande et à ladite unité d'actionnement ; ladite unité de commande étant connectée à des unités périphériques et à ladite unité d'actionnement; et des moyens d'actionnement permettant de sélectionner lesdites unités périphériques, ladite unité d'actionnement comprenant des moyens d'interaction et/ou de visualisation permettant d'interagir avec lesdits moyens d'actionnement sélectifs par des signaux, afin d'activer et/ou de désactiver au niveau d'une desdites unités périphériques ; **caractérisé en ce que** ladite unité d'actionnement est contenue dans un boîtier (13), doté d'un miroir (9) situé sur la surface tournée vers l'intérieur de la cabine de la voiture, de manière à pouvoir servir de rétroviseur, et ledit boîtier contenant ladite unité d'actionnement étant en position de repos ; et ladite unité d' actionnement contenant un axe vertical (14) le long duquel ladite unité d'actionnement peut coulisser, de manière à ce que quand elle est en position de repos, ladite unité d'actionnement peut se positionner à l'intérieur dudit rétroviseur.

2. Système selon la revendication 1, **caractérisé en ce qu'**au moins une partie desdites unités périphériques se trouve à l'intérieur de ladite unité de commande.

3. Système selon l'une des revendications précédentes, **caractérisé en ce qu'**au moins une partie desdites unités périphériques se trouve à l'extérieur de ladite unité de commande.

4. Système selon l'une des revendications précédentes, **caractérisé en ce que** l'unité de commande et ladite unité d'actionnement sont reliées par un câble.

5. Système selon la revendication 4, **caractérisé en ce que** ledit câble est un câble multifils.

6. Système selon l'une des revendications précédentes 1 à 3, **caractérisé en ce que** ladite unité de commande et ladite unité d'actionnement sont reliées par des dispositifs à infrarouge et/ou à radiofréquence ou par différents systèmes sans fil (blue-tooth, WiFi, etc.).

7. Système selon l'une des revendications précédentes, **caractérisé en ce que** ladite unité de commande et lesdites unités périphériques sont reliées par des câbles.

8. Système selon l'une des revendications précédentes, **caractérisé en ce que** lesdites unités périphériques sont des sirènes d'alarme et/ou des capteurs télémétriques, et/ou un enregistreur vidéo et/ou un dispositif d'alerte, et/ou des lumières clignotantes, et/ou des témoins lumineux, et/ou un dispositif de transmission, et/ou un navigateur, et/ou une caméra et/ou un dispositif GPS, et/ou un microphone, et/ou un affichage de messages variables.

9. Système selon l'une des revendications précédentes, **caractérisé en ce que** lesdits moyens d'actionnement sélectif sont constitués d'au moins un relais.

10. Système selon l'une des revendications précédentes, **caractérisé en ce que** lesdits moyens d'actionnement sélectif sont constitués d'un dispositif à semi-conducteurs.

11. Système selon la revendication 10, **caractérisé en ce que** ledit dispositif à semi-conducteurs est un SCR et/ou un TRIAC.

12. Système selon l'une des revendications précédentes, **caractérisé en ce que** lesdits moyens d'actionnement comprennent une unité logique de commande.

13. Système selon l'une des revendications précédentes, **caractérisé en ce que** l'unité de commande et ladite unité d'actionnement comprennent un microprocesseur programmable permettant de piloter lesdits moyens d'interaction et/ou de visualisation, et de constituer une interface avec ladite unité de commande.

14. Système selon l'une des revendications précédentes, **caractérisé en ce que** lesdits moyens d'interaction et/ou de visualisation comprennent au moins une caméra dirigée vers l'écran, afin de prendre des scènes extérieures.

15. Système selon l'une des revendications précédentes, **caractérisé en ce que** lesdits moyens d'interaction et/ou de visualisation comprennent un affichage à cristaux liquides, de préférence un affichage actif à cristaux liquides en matrice.

16. Système selon l'une des revendications précédentes, **caractérisé en ce que** lesdits moyens d'interaction et/ou de visualisation comprennent un microphone.

17. Système selon l'une des revendications précédentes, **caractérisé en ce que** lesdits moyens d'interaction et/ou de visualisation comprennent un panneau à boutons poussoirs.

18. Système selon l'une des revendications précédentes, **caractérisé en ce que** ladite unité d'actionnement comprend au moins une caméra à la surface orientée vers l'écran, ladite caméra étant raccordée à ladite unité d'actionnement.

19. Système selon l'une des revendications précédentes, **caractérisé en ce que** ledit axe est un axe rectiligne ou un pantographe.

20. Système selon l'une des revendications précédentes, **caractérisé en ce que** ladite unité d'actionnement peut tourner par rapport audit axe vertical.

21. Système selon l'une des revendications précédentes, **caractérisé en ce que** ladite unité d'actionnement comprend un cliquet de libération, afin de pouvoir coulisser sur ledit axe.

22. Système selon l'une des revendications précédentes, **caractérisé en ce que** ledit moyen d'alimentation comprend des piles amorçables situées à l'intérieur de ladite unité de commande et/ou d'actionnement.

23. Système selon l'une des revendications précédentes, **caractérisé en ce que** ledit système permet l'allumage d'un dispositif d'autorisation relié à la clé de serrure de contact d'allumage.
